(19) Europäisches Patentamt
European Patent Office
Office européen des brevets

(11) **EP 1 834 319 B1**

(12) **EUROPEAN PATENT SPECIFICATION**

(45) Date of publication and mention
of the grant of the patent:
**11.02.2015 Bulletin 2015/07**

(21) Application number: **05826366.6**

(22) Date of filing: **13.12.2005**

(51) Int Cl.:
***G09G 3/36*** *(2006.01)*     ***G09G 3/20*** *(2006.01)*

(86) International application number:
**PCT/EP2005/056719**

(87) International publication number:
**WO 2006/072537 (13.07.2006 Gazette 2006/28)**

(54) **DISPLAY METHOD AND DEVICE FOR REDUCING BLURRING EFFECTS**

DARSTELLUNGSVERFAHREN UND ANZEIGEVORRICHTUNG ZUR REDUKTION DER BILDSCHÄRFEVERZERRUNG

PROCEDE ET DISPOSITIF D'AFFICHAGE PERMETTANT DE REDUIRE LES EFFETS DE FLOU

(84) Designated Contracting States:
**DE FR GB**

(30) Priority: **06.01.2005 FR 0550040**

(43) Date of publication of application:
**19.09.2007 Bulletin 2007/38**

(73) Proprietor: **Thomson Licensing**
**92130 Issy-les-Moulineaux (FR)**

(72) Inventors:
• **BOREL, Thierry**
**F-35530 Noyal Sur Vilaine (FR)**
• **DOYEN, Didier**
**F-35340 La Bouexiere (FR)**

(74) Representative: **Le Dantec, Claude**
**Technicolor**
**1, rue Jeanne d'Arc**
**92443 Issy-les-Moulineaux (FR)**

(56) References cited:
**EP-A- 1 162 571     EP-A- 1 406 236**

• **DOYEN D ET AL: "COMPENSATION OF FALSE CONTOURS ON A PDP USING A PIXEL BASED MOTION ESTIMATOR COMBINED WITH AN EFFICIENT CODING TECHNIQUE" 2003 SID INTERNATIONAL SYMPOSIUM DIGEST OF TECHNICAL PAPERS. BALTIMORE, MD, MAY 20 - 22, 2003, SID INTERNATIONAL SYMPOSIUM DIGEST OF TECHNICAL PAPERS, SAN JOSE, CA : SID, US, vol. VOL. 34 / 2, 20 May 2003 (2003-05-20), pages 780-783, XP001174206**

Remarks:
The file contains technical information submitted after the application was filed and not included in this specification

**Description**

The present invention relates to a display method and device for improving the luminous efficiency of a matrix display using a pulse-width modulation, or PWM, technique. It relates, in particular, to the matrix displays in which the electro-optical valve array is formed by a liquid crystal valve array, more particularly a valve array of the LCOS, for 'Liquid Crystal on Silicon', type or a valve array of the OLED, for 'Organic Light Emitting Diode or Display', type.

The invention will be more particularly described in relation to a color sequential display comprising a LCOS electro-optical valve array without this implying any limitation of the scope of the invention to this type of display.

Liquid crystal displays, or LCDs, used in direct viewing or projection displays are based on a matrix layout with an active element within each pixel. Various addressing methods are used for generating the gray levels corresponding to the luminance to be displayed within each pixel selected. The most conventional method is an analog method according to which the active element is switched during a line period in order to transfer the analog value of the video onto the capacitance of the pixel. In this case, the liquid crystal material orients itself in a direction that depends on the value of the voltage stored in the capacitance of the pixel. The polarization of the entering light is then modified and analyzed by a polarizer so as to create the gray levels. One of the problems of this method comes from the response time of the liquid crystal which depends on the gray levels to be generated.

In order to overcome this kind of drawback, a method for controlling a matrix display using a pulse-width modulation, or PWM, technique, has been proposed in the prior art and notably in the patent US 6 239 780. In this case, the pixels of the liquid crystal display are addressed in ON or OFF mode, the ON mode corresponding to the saturation of the liquid crystal. The gray levels are determined by the width of the pulse. With such an addressing method, the dynamic range of the display is improved since the transition times now only represent a small proportion of the total opening time of the liquid crystal cell whatever the value of the luminance.

This addressing method is particularly advantageous when it is used to control the electro-optical valve array of a matrix display with sequential display of the colors in which the electro-optical valve array is successively illuminated with red, green and blue colored filters disposed on a colored wheel whose rotation is synchronized to the video signal. Since ON or OFF mode is used, this method benefits from a faster response time which is constant whatever the gray level that needs to be generated.

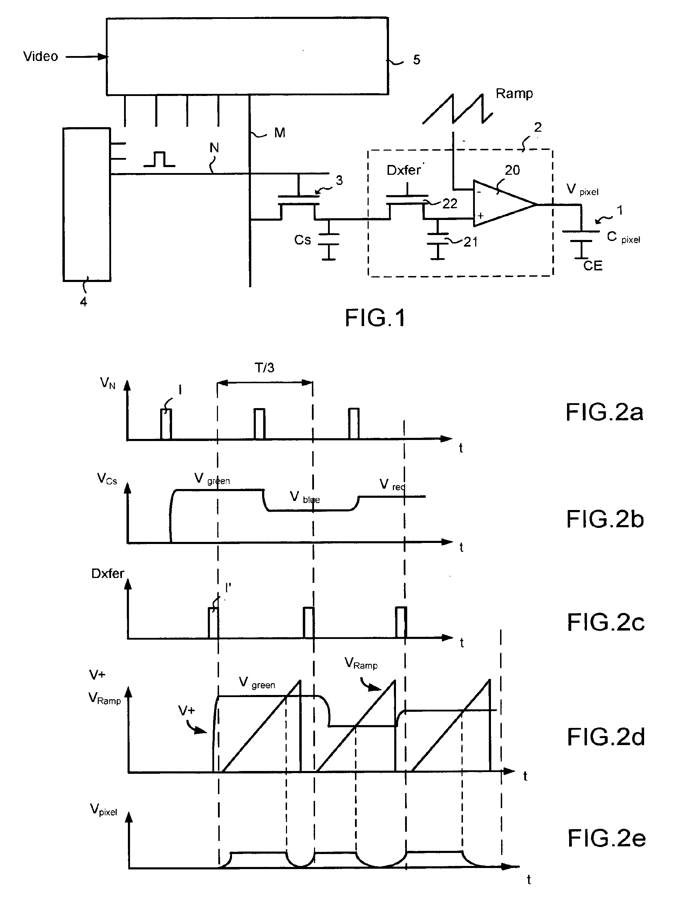

Figure 1 shows the circuit diagram of a color sequential matrix display implementing this addressing method. This matrix display comprises an electro-optical valve array, more particularly a display of the LCOS type. In figure 1, an image dot, or pixel, 1 of the display screen is shown very schematically. This pixel 1 is symbolized by a capacitor Cpixel connected between the counter-electrode CE and the output of a voltage-time converter 2 allowing the pulse-width modulation, or PWM, to be implemented.

The voltage-time converter 2 comprises an operational amplifier 20 whose negative input receives a signal Ramp having the form of a rising ramp with a period equal to T/3 (or T/6 or T/9 in order to reduce the effects of color break up, T being the image period) and whose other input receives a positive voltage corresponding to the charge of a capacitor 21. The charge of the capacitor 21 is controlled by a switching system, more particularly a transistor 22 mounted between one electrode of the capacitor and the input of the voltage-time converter. This switching device is formed by a transistor whose gate receives a pulse referenced Dxfer.

As shown in figure 1, the image dot, or pixel, 1 is connected to a row N and a column M of the matrix by means of a switching circuit such as a transistor 3. More specifically, the gate of the transistor 3 is connected to a row N of the matrix, which is itself connected to a row driver circuit 4. Furthermore, one of the electrodes of the transistor, for example the source, is connected to the input of the voltage-time converter 2, whereas the other electrode, for example the drain, is connected to one of the columns M of the matrix, this column being connected to a column driver circuit 5 which receives the video signal to be displayed. In addition, a capacitor Cs is mounted in parallel with the pixel capacitor at the input of the voltage-time converter in order to store the video signal value when said pixel is selected. The column driver circuit 5 and row driver circuit 4 are conventional circuits. The column driver circuit 5 receives the video signal to be displayed 'Video' and the row driver circuit 4 allows the rows to be addressed sequentially.

With reference to figures 2a to 2e, the mode of operation of the display will be explained when it is used in a color sequential display, namely when, over a frame period T, a wheel carrying three color filters, green, blue and red, makes one complete rotation to produce a sequential illumination of the valve array.

As shown in figure 2a, a pulse I is applied during each sub-frame of duration T/3 to the row N so as to turn on the switching transistor 3. When the switching transistor 3 is turned on, the capacitor Cs charges up to a voltage corresponding to the video present on the column M. Namely, if a green colored filter is located in front of the display during the first sub-frame of duration T/3, the capacitor Cs charges up to a value referenced $V_{green}$ in figure 2b. During the following sub-frame, a new pulse I is applied to the row N allowing the capacitor Cs to charge up to a voltage referenced $V_{blue}$ corresponding to the blue color being located in front of the display at that time. Similarly, at the start of the next sub-frame, a new pulse I is applied to the row N and the capacitor Cs charges up to a voltage referenced $V_{red}$ in figure 2b. With the display in figure 1 controlled by a PWM addressing method, the values $V_{green}$, $V_{blue}$ and $V_{red}$

successively stored in the capacitor Cs are applied to the capacitor $C_{pixel}$ by means of the voltage-time converter 2 which operates in the following manner.

A pulse I' is applied within a sub-frame to the gate Dxfer of the switching transistor 22 so as to turn it on. The voltage stored in the capacitor Cs is then transferred onto the capacitor 21 mounted in parallel and connected to one of the input terminals of the operational amplifier 20. As shown in figure 2d, at the end of the pulse I' applied to the gate Dxfer, the signal Ramp is applied to the negative input of the operational amplifier 20. Consequently, at the output of the operational amplifier 20, a voltage pulse $V_{pixel}$ is obtained whose duration is proportional to the voltage $V_{green}$ stored on the capacitor 21, as shown in figures 2d and 2e. The same is true for the sub-frames corresponding to the passages of the blue and red colored filters in the case where the display in figure 1 is used for a sequential display of the colors.

Although this method has the advantage of improving the response time of the liquid crystal and of thus obtaining an optimal color saturation for the video content, the luminous efficiency is however affected by a 'blurring effect' when images comprising moving objects are displayed. This blurring effect is present on the contours of objects in the displayed images. It is not visible in the static images or the images whose content changes with a much lower frequency than the screen refresh frequency.

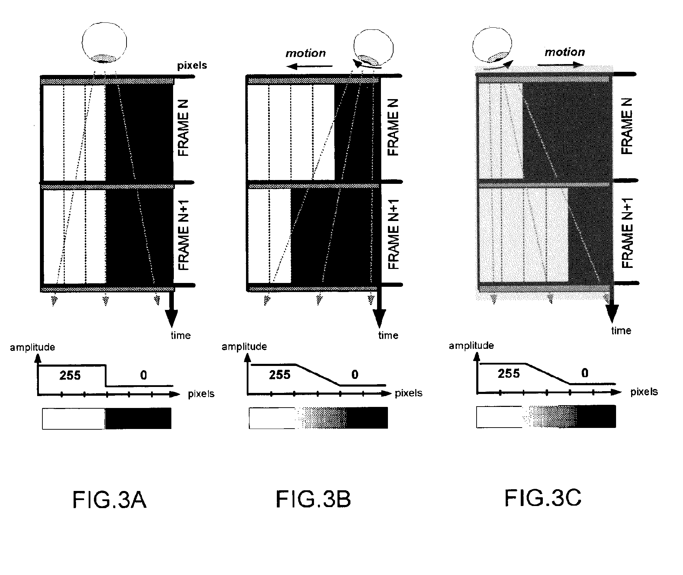

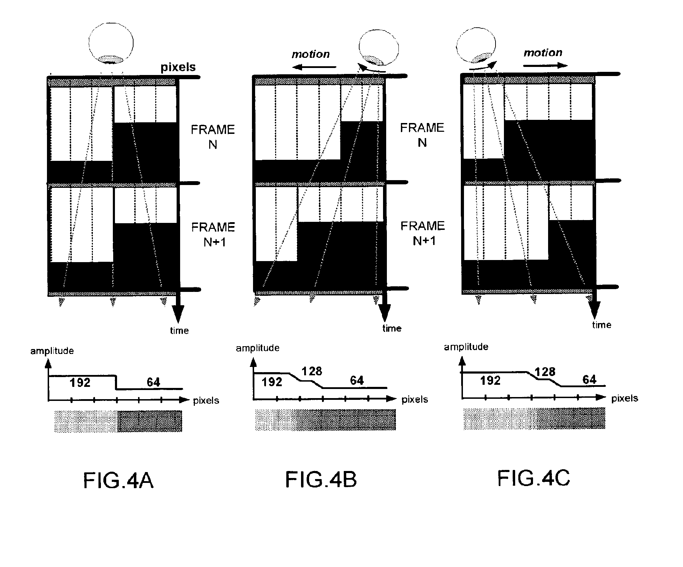

This blurring effect is illustrated by figures 3A to 3C in the case of a transition between a maximum gray level of 255 and a minimum gray level of 0 and by figures 4A to 4C in the case of a transition between two unsaturated gray levels, namely a gray level of 192 and a gray level of 64. These transitions correspond to contours of objects. In the following part of the description, the presence of a level 0 next to a level 255 on two adjacent pixels belonging to the same row will be denoted as black/white or white/black transition, even if the level 255 actually represents a saturated red, a saturated green or a saturated blue.

In the upper part of these figures, the ordinate axis represents the time axis and the abscissa axis the image pixels.

In figure 3A, the white/black transition is static, i.e. it does not move between the two displayed video frames, N and N+1. In figure 3B, it moves by 2 pixels toward the left between the two video frames and in figure 3C, it moves by 2 pixels toward the right. During the display of these two frames, the eye integrates the gray levels over time following the oblique arrows shown in the figures since it tends to follow the motion of the transition. The eye then perceives gray levels such as are shown in the lower part of the figures. It will thus be noted that, when the transition is moving between the two frames, the eye sees a blurred band, with a width of about 2 pixels in the present case, around this transition.

This defect is also present in the case of figures 4A to 4C which illustrate the case of a transition between a gray level of 192 and a gray level of 64. In figure 4A, the transition is static; in figure 4B, it moves by 2 pixels toward the left between the two video frames and in figure 4C, it moves by 2 pixels toward the right. The width of the blurred band depends on the difference between the gray levels of the pixels adjacent to the transition and on the amplitude of the motion.

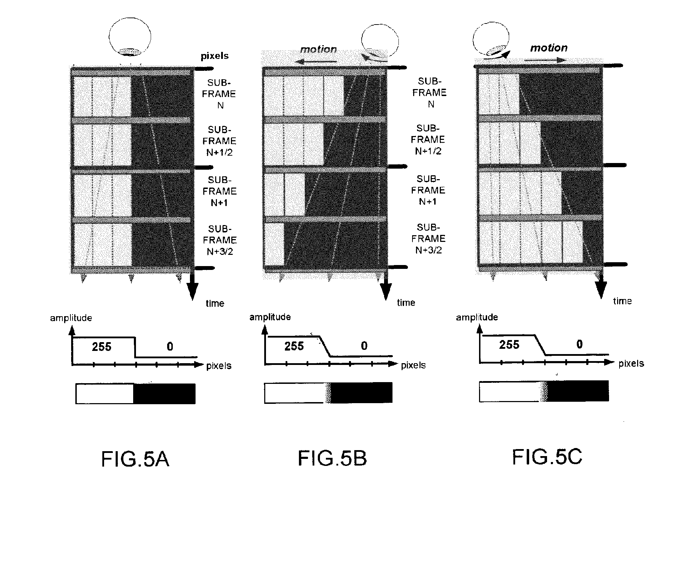

As a remedy for this defect, a known solution is to double the frequency of the video frames. This solution is illustrated in figures 5A to 5C in the case of a white/black transition. It consists in generating, for each pair of images in the sequence to be displayed, an intermediate image which would be motion compensated and in displaying it between the two corresponding frames. For this purpose, the duration of the frames is divided by 2. For example, the frame N is divided into a sub-frame N and a sub-frame N+1/2 of durations equal to half the duration of the frame N in figures 3A to 3C. Similarly, the frame N+1 is divided into a sub-frame N+1 and a sub-frame N+3/2. The images previously displayed during the frames N and N+1 are now displayed during the sub-frames N and N+1 and motion-compensated intermediate images are displayed during the sub-frames N+1/2 and N+3/2. The width of the blurred band is now reduced. However, this solution requires the image frequency to be multiplied by 2, which makes the construction of the display and of the row and column driver circuits of the electro-optical valve array very complex.

The article entitled "Compensation of false contours on a PDP using a pixel based motion estimator combined with an efficient coding technique", written by D. Doyen et al published on May 20, 2003 discloses a method using a pixel-based motion estimator combined to an efficient video coding technique for correctly rendering moving objects on PDP.

The present invention provides a different solution for reducing this blurring effect, which does not require a doubling of the image frequency.

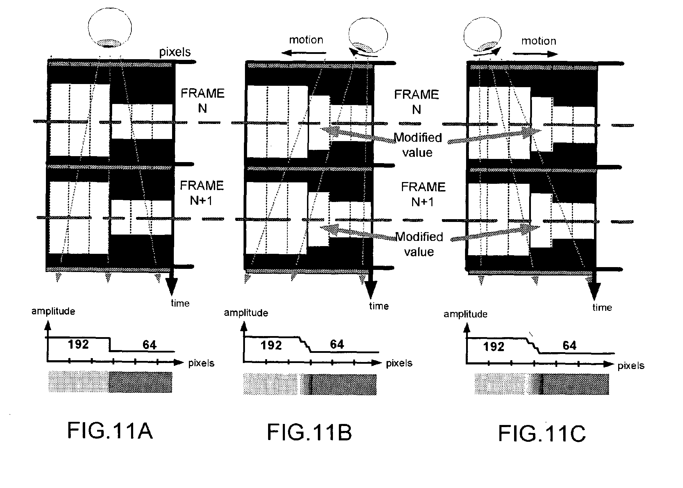

The present invention is set forth in the independent claims 1 and 6. In the following, the word "embodiment" is used to designate actual embodiments of the invention only in page 12 line 13 to page 13 line 13 with reference to figures 11 - 13; other occurrences of the word "embodiment(s)" refer to examples shown for illustrative purposes only.

Advantageously, the gray level of the pixels of a group of consecutive pixels encompassing the contour in question is modified and they are assigned an intermediate level in the range between the initial gray levels of the pixels adjacent to the contour.

The intermediate level applied to the pixels of the group is calculated as a function of the initial gray levels of the pixels adjacent to the contour.

Advantageously, the method also comprises a step for calculating the motion of each contour detected, the intermediate level then being calculated as a function of the amplitude of the motion detected for said contour. The number of pixels of the group of pixels is advantageously also determined as a function of the amplitude of the calculated motion for the contour in question.

The images thus modified can then be displayed in several ways. According to a first embodiment, the intermediate gray level of the modified pixels is displayed at the start or at the end of the image display frame depending on the motion detected for this contour and on the difference, positive or negative, between the initial gray levels of the pair of pixels adjacent to the contour.

According to a second embodiment, the display phase of the gray level of the image pixels is centered in the middle of the image display frame.

The invention also relates to a device for displaying a sequence of video images comprising a matrix of illuminating cells designed to display the gray level of the image pixels of said sequence, means for controlling said matrix in order to illuminate each of the cells for a duration that is proportional to the gray level of the corresponding image pixel to be displayed, characterized in that it additionally comprises

- first means for detecting the moving object contours within said sequence of video images,
- second means for modifying, for each image of the sequence and each contour detected, the gray level of at least one of the pixels adjacent to the contour by assigning to it an intermediate level in the range between its initial gray level and that of the other pixel adjacent to the contour in question, said modified sequence being delivered to said means for controlling said matrix.

The invention is just as applicable to color sequential systems as to color non-sequential systems.

The invention will be better understood upon reading the description that follows, presented by way of non-limiting example and with reference to the appended drawings, in which:

- figure 1, already described above, is a schematic representation of a matrix display controlled by an addressing method of the pulse-width modulation, or PWM, type;
- figures 2a to 2e, already described above, show the various control signals and the output signal of the display in figure 1 for the case of a color sequential display;
- figures 3A to 3C, already described above, show the display defects generated by such an addressing method in the case of a white/black transition;
- figures 4A to 4C, already described above, show the display defects generated by such an addressing method in the case of a transition between two unsaturated gray levels;
- figures 5A to 5C, already described above, illustrate a solution from the prior art for reducing these defects;
- figures 6A to 6C illustrate a first embodiment of the method of the invention in the case of a transition between two unsaturated gray levels;
- figure 7 is a circuit diagram in the form of circuit blocks for the implementation of the method of the invention;
- figures 8A to 8C illustrate another embodiment of the method of the invention in the case of a white/black transition;
- figure 9 is a circuit diagram of a display device implementing the embodiment in figures 8A to 8C;
- figures 10a to 10e show the various control signals and the output signal of the device in figure 9 for the case of a color sequential display;
- figures 11A to 11C illustrate a preferred embodiment of the method of the invention that is applicable to all the types of transition detected;
- figure 12 is a circuit diagram of a display device implementing the embodiment in figures 11A to 11C, and
- figures 13a to 13e show the various control signals and the output signal of the device in figure 12 in the case of a color sequential display.

According to the invention, the object is to detect the contours of objects in motion within the sequence of images to be processed, to modify, for each image of said sequence and each contour detected, the gray level of at least one pixel adjacent to said contour by assigning to it an intermediate level in the range between its initial gray level and that of the other pixel adjacent to said contour and, lastly, to display the images thus modified in PWM mode.

Preferably, the gray levels of the pixels from a group of consecutive pixels encompassing the contour in question are modified and they are assigned an intermediate level in the range between the initial gray levels of the pixels adjacent to said contour.

The intermediate levels assigned to the pixels of the group are calculated as a function of the initial gray levels of the pixels adjacent to the contour in question and, advantageously, as a function of the amplitude of the motion detected for the contour in question.

Furthermore, the number of pixels in the group of pixels is advantageously also calculated as a function of the amplitude of the motion detected for the contour in question.

The detection of contours and the estimation of motion of the contours detected are carried out in a conventional manner using conventional means that are well known to those skilled in the art.

The invention will be more particularly described by way of examples in which the video level of a single pixel adjacent to a contour is modified. In these examples, the intermediate level assigned to this pixel is taken to be equal to the arithmetic mean of the initial gray levels of the pixels adjacent to the contour.

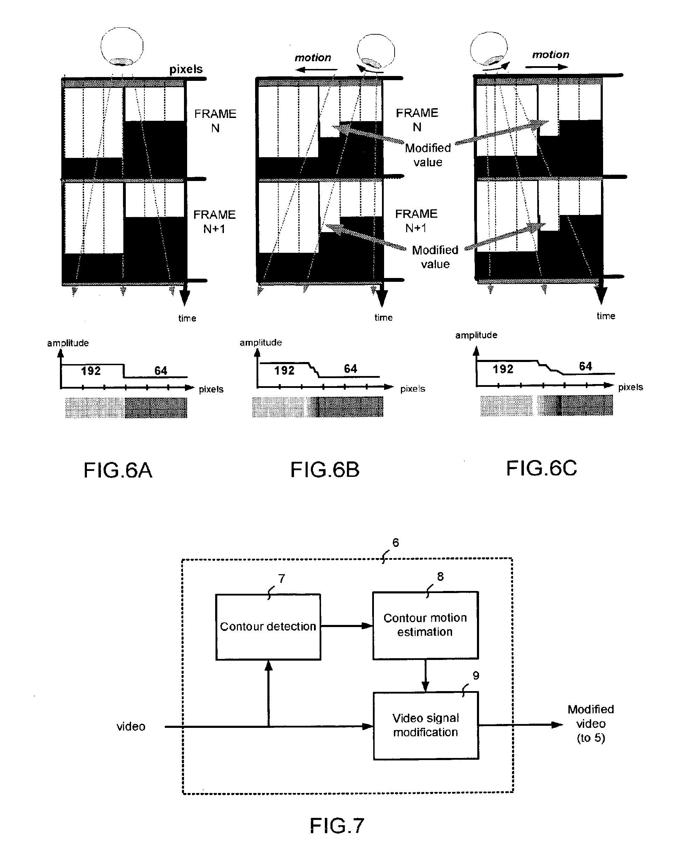

Figures 6A to 6C illustrate a first example implementing the method of the invention. These figures relate to the case of a transition between a gray level of 192 (3rd pixel starting from the left) and a gray level of 64 (4th pixel starting from the left). These figures are to be compared with figures 4A to 4C showing the same transition.

In this example, only the gray level of one of the two pixels adjacent to the contour (namely the gray level of the 4th pixel) is modified and is brought to an intermediate value of 128, in the range between 64 and 192, representing the arithmetic mean of these two values. In this way, when the contour moves, the blurring effect perceived by the eye (after integration in the direction of the arrows) is reduced in width as can be seen in the lower part of figures 6B and 6C. Of course, it would be equally possible to modify the gray level of the 3rd pixel instead of the 4th pixel, or even to modify the gray levels of the 3rd and 4th pixels. In this second case, the intermediate level of the 3rd pixel would also be in the range between 64 and 192 and would be taken to be greater than that of the 4th pixel.

More generally, the number of pixels whose video level is modified depends on the amplitude of the contour motion. The higher the amplitude of the motion, the greater the number of pixels whose video level is modified. Similarly, the amplitude of the contour motion is advantageously taken into account in the calculation of the intermediate level or levels relating to this contour.

The case of a transition situated between two consecutive pixels $P(x,y)$ and $P(x+1,y)$ is taken. $NG[P(x,y)]$ furthermore denotes the gray level of the pixel $P(x,y)$. If D is the level difference in the horizontal direction between two consecutive pixels, then $D = P(x,y) - P(x+1,y)$. Furthermore, Vx and Vy respectively denote the motion vectors obtained locally in the horizontal direction and the vertical direction at the location of the transition.

According to a particular embodiment of the invention, the gray level of the pixels in the range:

$$\mathbf{x_{min}} = \mathbf{TRUNC}\ (\mathbf{x} - 1/2Vx)\ +1\ \text{ and }\ \mathbf{x_{max}} = \mathbf{TRUNC}\ (x+1/2Vx)$$

is modified, where TRUNC corresponds to an operation to truncate to an integer value.

The gray level assigned to the pixels in the range between $x_{min}$ and $x_{max}$ is for example defined as a function of its separation with one of the pixels $P(x_{min},y)$ and $P(x_{max},y)$:

$$\begin{cases} NG[P(x_{min},y)] = NG[P(x+1,y)] + D = NG[P(x,y)] \\ NG[P(x_{max},y)] = NG[P(x+1,y)] = NG[P(x,y)] - D \end{cases}$$

and

$$NG[P(x_i,y)] = \frac{NG[P(x_{min},y)] \times (x_{max}-x_i+1) \ast + D}{x_{max}-x_{min}}$$

The images thus modified are subsequently displayed according to the pulse-width modulation technique previously described.

It should be noted that the width of the transition is not identical in the two cases (motion toward the left and motion toward the right) illustrated by figures 6B and 6C; it is however still reduced in both cases with respect to the prior art illustrated by figures 4A to 4C.

The method of the invention can be readily implemented in a video processing circuit placed upstream of the column driver circuit 5 of the display in figure 1, the video levels generated being subsequently delivered to the column driver circuit 5. Such a circuit, referenced 6, is illustrated by figure 7. It comprises a contour detection circuit 7, a motion estimation circuit 8 for estimating the motion of the contours detected and a circuit 9 for modifying the video level of the pixels adjacent to the contours detected by assigning to them an intermediate level calculated as previously described. The image thus modified can then be displayed by a device such as that shown in figure 1.

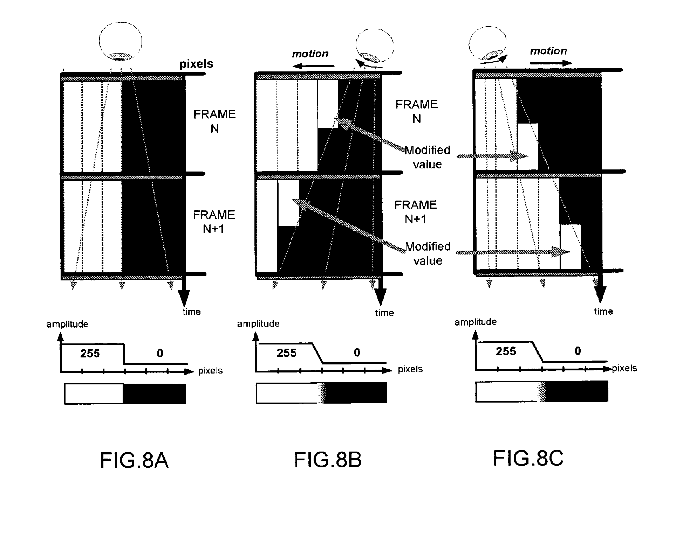

In the case of images comprising black/white or white/black transitions, the reduction of the blurring effects is not the same for a black/white transition and a white/black transition with a method such as that described above. An improved embodiment is therefore also provided in which the variable pulse widths used to display the gray levels of the image are positioned differently within the frame depending on the direction of motion of the contours and depending on the gray levels on either side of the contours. This new embodiment is illustrated by figures 8A to 8C which relate to a white/black transition.

In this second embodiment, the intermediate gray levels are calculated as previously described. The intermediate level of one of the pixels adjacent to the white/black transition is therefore taken to be equal to 128. The modified video signal can be generated by a circuit such as is described in figure 7. In this embodiment, the display of the gray levels is however modified. The variable-width pulses are positioned differently within the frame or sub-frame (in the case of a color sequential display) depending on whether the transition is moving toward the left or toward the right and on whether the gray level increases or decreases in the course of this transition.

According to this embodiment, the variable-width pulses are positioned within the frame (or sub-frame in the case of a color sequential display) in the following manner:

- when the gray level increases in the course of the transition in a given direction, for example from left to right, and when the transition is moving toward the left, the pulses are positioned at the end of the frame;
- when the gray level increases in the course of the transition from left to right and when the transition is moving toward the right, the pulses are positioned at the start of the frame;
- when the gray level decreases in the course of the transition from left to right and when the transition is moving toward the left, the pulses are positioned at the start of the frame; and
- when the gray level decreases in the course of the transition from left to right and when the transition is moving toward the right, the pulses are positioned at the end of the frame.

In the example illustrated by figures 8A to 8C, figure 8A shows a static white/black transition, figure 8B shows the same transition moving toward the left and figure 8C shows the same transition moving toward the right. The pulses are placed at the start of the frame when the transition is moving toward the left and at the end of the frame when it is moving toward the right. A reduced blurred bandwidth is thus obtained for any given situation.

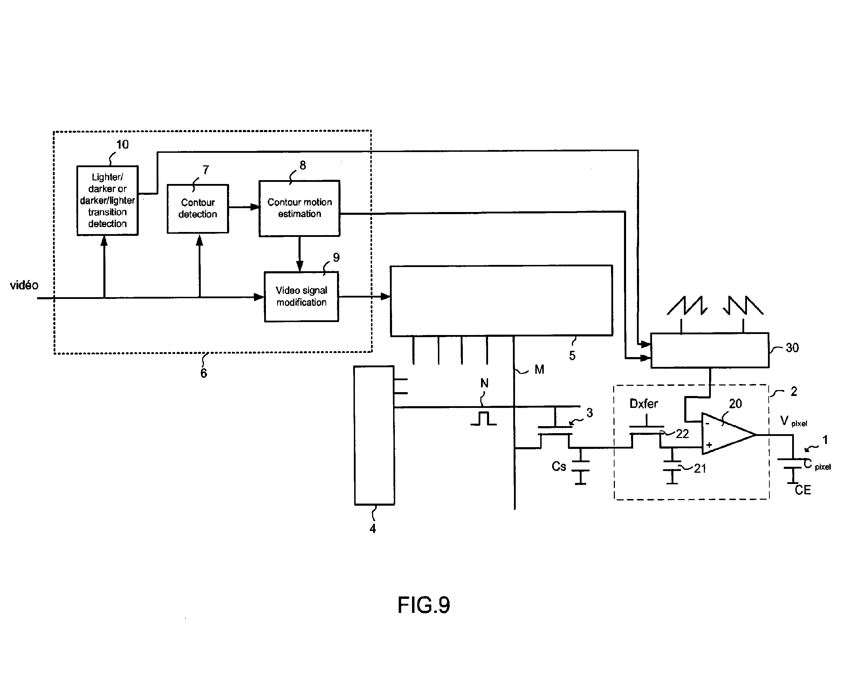

Such a display scenario implies that the structure of the matrix display, together with that of the processing block 6, be somewhat modified. Figure 9 shows a display comparable to the display in figure 1 equipped with a processing block 6. This display differs from that in figure 1 in that it additionally comprises a selection block 30 designed to select, depending on the direction of movement of the transition and on the type of transition (lighter/darker or vice versa), either a rising voltage ramp (as described with reference to figure 1) or a falling voltage ramp. Furthermore, the processing block 6 differs from that in figure 7 in that it comprises a second detection circuit 10 for detecting the type of the transitions (lighter/darker or darker/lighter) in the images. This selection block 30 comprises four inputs: a first signal input receiving a rising voltage ramp, a second signal input receiving a falling voltage ramp, a first control input receiving a first control signal representing the direction of motion of the transition and a second control input receiving a second control signal representing the type of the transition. The first control signal is delivered by the motion estimation circuit 8 and the second control signal is delivered by the detection circuit 10. The output of the selection block 30 is connected to the negative input of the operational amplifier 20.

In this display, the direction, positive or negative, of the slope of the voltage ramp is selected depending on the detected motion of the contour in question and on the difference, positive or negative, between the gray levels either side of the contour. A positive slope denotes a rising voltage ramp and a negative slope denotes a falling voltage ramp.

In operation, the block 30 delivers the rising voltage ramp at its output when the contour (the transition) is moving toward the left and when this transition is a lighter/darker transition or when the contour is moving toward the right and when this transition is a darker/lighter transition. It delivers a falling voltage ramp when the contour is moving toward the left and when this transition is a darker/lighter transition or when the contour is moving toward the right and when this transition is a lighter/darker transition.

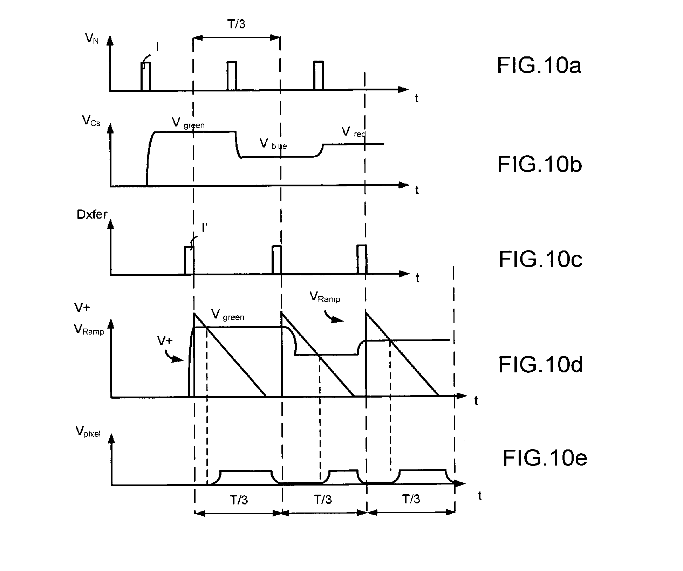

Figures 10a to 10e, to be compared with figures 2a to 2e, illustrate the application of a falling voltage ramp to the negative input of the amplifier 20. The pulses at the output of the amplifier are generated at the end of the frame.

A final embodiment, corresponding to a preferred embodiment, is described with reference to figures 11A to 11C, 12 and 13. In this embodiment, the PWM pulse employed for displaying the gray levels of the image pixels is positioned in the middle of the frame. This embodiment no longer requires that the type and direction of motion of the transition be detected.

Figures 11A to 11C show the positioning of the PWM pulses in the middle of the frame in the case of a transition 192 - 64. The intermediate levels are calculated as previously described. As is shown in the lower part of these figures, a reduction in the width of the blurred band is obtained that is at least equivalent to that obtained with the methods described with reference to figures 6A to 6C or 8A to 8C.

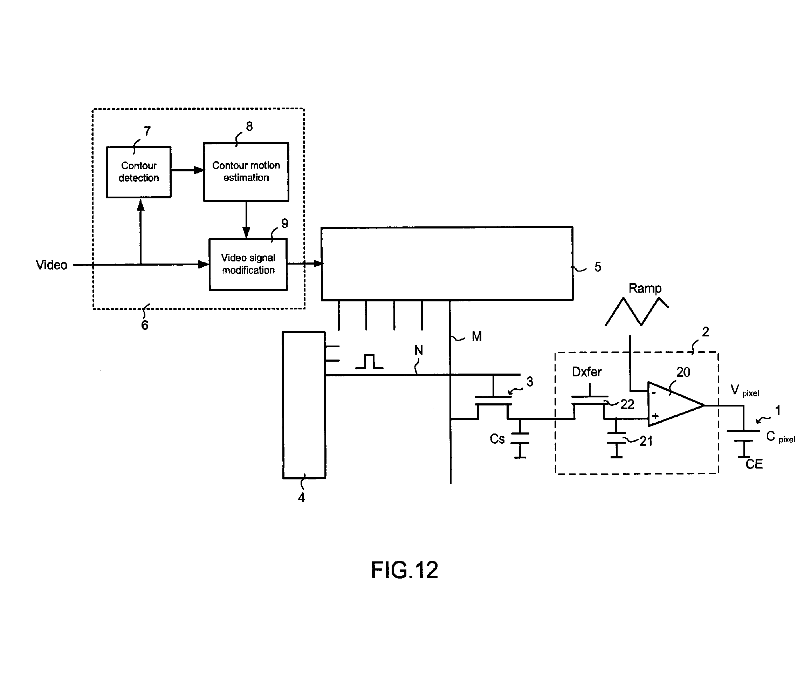

In order to obtain such a display scenario in the case of a color sequential display, it suffices to apply a double voltage ramp of period T/3 comprising a rising portion and a falling portion of same duration, as shown in figure 12, to the negative input of the operational amplifier 20.

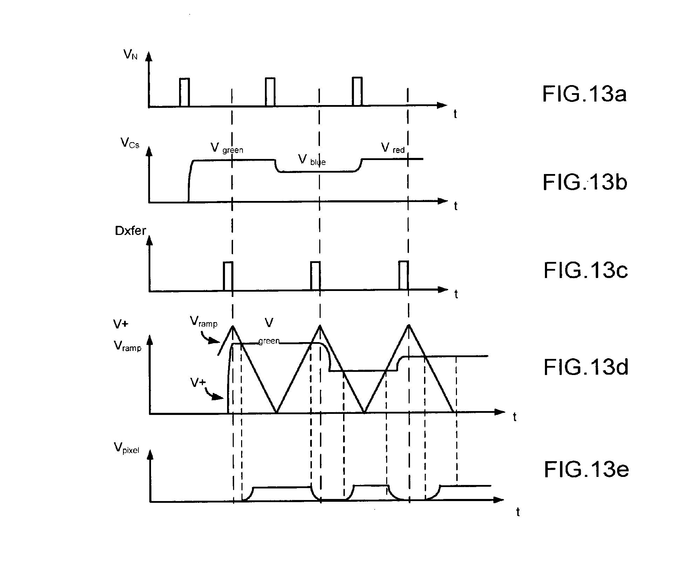

Figures 13a to 13e illustrate the application of a falling voltage ramp to the negative input of the amplifier 20. The pulses at the output of the amplifier are generated in the middle of the frame or close to it.

**Claims**

1. A method of displaying a video image sequence on a matrix display using a pulse-width modulation PWM, in which the display time of an image pixel is proportional to the gray level to be displayed, the matrix display being controlled by applying a double voltage ramp comprising a rising portion and a falling portion of same duration, said method being **characterized in that** it comprises the following steps:

   - detecting the moving object contours within said sequence of video images,
   - determining an initial grey level of at least one first pixel and an initial grey level of a second pixel, the first pixel being positioned on one side adjacent to said contour and the second pixel being positioned on the opposite side adjacent to said contour on a same row of pixels,
   - modifying within one frame period, for at least an image of said sequence and at least a contour detected in said at least an image, the gray level of the at least one first pixel adjacent to said contour by assigning to it an intermediate level in the range between said initial gray level of said first pixel and said initial gray level of the second pixel adjacent to said contour, and
   - displaying said modified image sequence, the PWM pulse used for displaying the gray levels of the image pixels being centered in the middle of the image display frame.

2. The method as claimed in claim 1, **characterized in that** the gray level of the pixels of a group of consecutive pixels encompassing the contour in question is modified and they are assigned an intermediate level in the range between the initial gray levels of the pixels adjacent to said contour.

3. The method as claimed in either of claims 1 and 2, **characterized in that** the intermediate level is calculated as a function of the initial gray levels of the pixels adjacent to the contour in question.

4. The method as claimed in claim 3, **characterized in that** it also comprises a step for calculating the motion of each contour detected, and **in that** the intermediate level is furthermore calculated as a function of the amplitude of the motion detected for said contour.

5. The method as claimed in claim 4, **characterized in that** the number of pixels of the group of consecutive pixels is determined as a function of the amplitude of the calculated motion for the contour in question.

6. A device for displaying a sequence of video images comprising a matrix of illuminating cells (1) designed to display the gray level of the image pixels of said sequence using a pulse-width modulation PWM, means (2) for controlling said matrix in order to illuminate each of the cells for a duration that is proportional to the gray level of the corresponding image pixel to be displayed, **characterized in that** it additionally comprises

   - first means (7) for detecting the moving object contours within said sequence of video images,
   - second means for determining an initial grey level of at least one first pixel and an initial grey level of a second pixel, the first pixel being positioned on one side adjacent to said contour and the second pixel being positioned on the opposite side, adjacent to said contour on a same row of pixels,
   - third means (9) for modifying within one frame period, for at least an image of said sequence and at least a contour detected in said at least an image, the gray level of the at least one first pixel adjacent to said contour by assigning to it an intermediate level in the range between said initial gray level of said first pixel and said initial gray level of the second pixel adjacent to said contour, said modified sequence being delivered to said means for controlling said matrix,
   - fourth means for displaying said modified image sequence, the PWM pulse used for displaying the gray levels of the image pixels being centered in the middle of the image display frame,

   wherein the means (2) for controlling said matrix means comprise an operational amplifier (20) whose output is connected to the cells of the matrix, the signal of the modified sequence and a signal with double voltage ramp being respectively applied to first and second inputs of said amplifier.

7. The device as claimed in claim 6, **characterized in that** said third means modify the gray level of the pixels of a group of consecutive pixels encompassing the contour in question and they are assigned an intermediate level in the range between the initial gray levels of the pixels adjacent to said contour.

8. The device as claimed in either of claims 6 and 7, **characterized in that** said third means comprise calculation means for calculating the intermediate level as a function of the initial gray levels of the pixels adjacent to the contour in question.

9. The device as claimed in claim 8, **characterized in that** it also comprises fourth means (8) for calculating the motion of each contour detected.

10. The device as claimed in claim 9, **characterized in that** said calculation means is arranged to calculate the intermediate level as a function of the amplitude of the motion estimated for the corresponding contour.

**Patentansprüche**

1. Verfahren zum Anzeigen einer Videobildsequenz auf einer Matrixanzeige unter Verwendung einer Pulsbreitenmodulation, PWM, in der die Anzeigezeitdauer eines Bildpixels proportional zu der anzuzeigenden Graustufe ist, wobei die Matrixanzeige durch Anlegen einer doppelten Spannungsrampe, die einen ansteigenden Abschnitt und einen abfallenden Abschnitt mit derselben Dauer umfasst, gesteuert wird, wobei das Verfahren **dadurch gekennzeichnet ist, dass** es die folgenden Schritte umfasst:

   - Detektieren der Konturen eines bewegten Objekts innerhalb der Sequenz von Videobildern,
   - Bestimmen einer Anfangsgraustufe mindestens eines ersten Pixels und einer Anfangsgraustufe eines zweiten Pixels, wobei das erste Pixel auf einer Seite angrenzend an die Kontur positioniert ist und das zweite Pixel auf der gegenüberliegenden Seite angrenzend an die Kontur in einer selben Zeile von Pixeln positioniert ist,
   - Ändern der Graustufe des mindestens einen ersten Pixels, das an die Kontur angrenzt, innerhalb einer Einzelbildzeitdauer für mindestens ein Bild der Sequenz und für mindestens eine in dem mindestens einen Bild detektierte Kontur dadurch, dass ihm ein Zwischenpegel in dem Bereich zwischen der Anfangsgraustufe des ersten Pixels und der Anfangsgraustufe des zweiten Pixels, das an die Kontur angrenzt, zugewiesen wird, und
   - Anzeigen der geänderten Bildsequenz, wobei der zum Anzeigen der Graustufen der Bildpixel verwendete PWM-Impuls in der Mitte des Bildanzeigeeinzelbilds zentriert ist.

2. Verfahren nach Anspruch 1, **dadurch gekennzeichnet, dass** die Graustufe der Pixel einer Gruppe aufeinanderfolgender Pixel, die die fragliche Kontur umfassen, geändert wird und dass ihnen ein Zwischenpegel in dem Bereich zwischen den Anfangsgraustufen der an die Kontur angrenzenden Pixel zugewiesen wird.

3. Verfahren nach einem der Ansprüche 1 und 2, **dadurch gekennzeichnet, dass** der Zwischenpegel als eine Funktion der Anfangsgraustufen der an die fragliche Kontur angrenzenden Pixel berechnet wird.

4. Verfahren nach Anspruch 3, **dadurch gekennzeichnet, dass** es außerdem einen Schritt zum Berechnen der Bewegung jeder detektierten Kontur umfasst und dass der Zwischenpegel darüber hinaus als eine Funktion der Amplitude der für die Kontur detektierten Bewegung berechnet wird.

5. Verfahren nach Anspruch 4, **dadurch gekennzeichnet, dass** die Anzahl der Pixel der Gruppe aufeinanderfolgender Pixel als eine Funktion der Amplitude der berechneten Bewegung für die fragliche Kontur bestimmt wird.

6. Vorrichtung zum Anzeigen einer Sequenz von Videobildern, wobei die Vorrichtung eine Matrix von Beleuchtungszellen (1) umfasst, die zum Anzeigen der Graustufen der Bildpixel der Sequenz unter Verwendung eines Pulsbreitenmodulationsmittels, PWM-Mittels, (2) zum Steuern der Matrix, um jede der Zellen für eine Dauer, die proportional zu der Graustufe des entsprechenden anzuzeigenden Bildpixels ist, leuchten zu lassen, ausgelegt ist, **dadurch gekennzeichnet, dass** sie zusätzlich umfasst:

   - erste Mittel (7) zum Detektieren der Konturen eines bewegten Objekts innerhalb der Sequenz von Videobildern,
   - zweite Mittel zum Bestimmen einer Anfangsgraustufe mindestens eines ersten Pixels und einer Anfangsgraustufe eines zweiten Pixels, wobei das erste Pixel auf einer Seite angrenzend an die Kontur positioniert ist und das zweite Pixel auf der gegenüberliegenden Seite angrenzend an die Kontur in einer selben Zeile von Pixeln positioniert ist,

- dritte Mittel (9) zum Ändern der Graustufe des mindestens einen ersten Pixels, das an die Kontur angrenzt, innerhalb einer Einzelbildzeitdauer für mindestens ein Bild der Sequenz und für mindestens eine in dem mindestens einen Bild detektierte Kontur dadurch, dass ihm ein Zwischenpegel in dem Bereich zwischen der Anfangsgraustufe des ersten Pixels und der Anfangsgraustufe des zweiten Pixels, das an die Kontur angrenzt, zugewiesen wird, wobei die geänderte Sequenz an die Mittel zum Steuern der Matrix geliefert wird, und

- vierte Mittel zum Anzeigen der geänderten Bildsequenz, wobei der zum Anzeigen der Graustufen der Bildpixel verwendete PWM-Impuls in der Mitte des Bildanzeigeeinzelbilds zentriert ist,

wobei die Mittel (2) zum Steuern der Matrixmittel einen Operationsverstärker (20) umfassen, dessen Ausgang mit den Zellen der Matrix verbunden ist, wobei das Signal der geänderten Sequenz und ein Signal mit der doppelten Spannungsrampe an den ersten bzw. an den zweiten Eingang des Verstärkers angelegt werden.

**7.** Vorrichtung nach Anspruch 6, **dadurch gekennzeichnet, dass** die dritten Mittel die Graustufe der Pixel einer Gruppe aufeinanderfolgender Pixel, die die fragliche Kontur umfassen, ändern und dass ihnen ein Zwischenpegel in dem Bereich zwischen den Anfangsgraustufen der an die Kontur angrenzenden Pixel zugewiesen wird.

**8.** Vorrichtung nach einem der Ansprüche 6 und 7, **dadurch gekennzeichnet, dass** die dritten Mittel Rechenmittel zum Berechnen der Zwischenpegel als eine Funktion der Anfangsgraustufen der an die fragliche Kontur angrenzenden Pixel umfassen.

**9.** Vorrichtung nach Anspruch 8, **dadurch gekennzeichnet, dass** sie außerdem vierte Mittel (8) zum Berechnen der Bewegung jeder detektierten Kontur umfasst.

**10.** Vorrichtung nach Anspruch 9, **dadurch gekennzeichnet, dass** die Rechenmittel zum Berechnen des Zwischenpegels als eine Funktion der Amplitude der geschätzten Bewegung für die fragliche Kontur ausgelegt sind.

**Revendications**

**1.** Un procédé d'affichage d'une séquence d'images vidéo sur un écran matriciel utilisant une modulation d'impulsions en durée (MID), dans lequel le temps d'affichage d'un pixel d'image est proportionnel au niveau de gris à afficher, l'affichage matriciel étant contrôlé par l'application d'une rampe de tension double comprenant une portion montante et une portion descendante de la même durée, ledit procédé étant **caractérisé en ce qu'**il comprend les étapes suivantes :

- détection des contours d'objet en mouvement dans ladite séquence d'images vidéo,
- définition d'un niveau de gris de départ d'au moins un premier pixel et un niveau de gris de départ d'un second pixel, le premier pixel étant positionné sur un côté adjacent audit contour et le second pixel étant positionné de l'autre côté adjacent audit contour sur une même rangée de pixels,
- modification, dans une période de trame, pour au moins une image de ladite séquence et au moins un contour détecté dans ladite image au moins, du niveau de gris d'au moins un premier pixel adjacent audit contour en y affectant un niveau intermédiaire dans la plage située entre ledit niveau de gris de départ du premier pixel et ledit niveau de gris de départ du second pixel adjacent audit contour, et
- affichage de ladite séquence d'images modifiée, l'impulsion MID utilisée pour afficher les niveaux de gris des pixels d'image étant centrés au milieu de la trame d'affichage de l'image.

**2.** Le procédé tel que revendiqué dans la revendication 1, **caractérisé en ce que** le niveau de gris des pixels d'un groupe de pixels consécutifs cernant le contour en question est modifié et ils sont affectés à un niveau intermédiaire dans la plage située entre les niveaux de gris de départ des pixels adjacents audit contour.

**3.** Le procédé tel que revendiqué dans l'une quelconque des revendications 1 et 2, **caractérisé en ce que** le niveau intermédiaire est calculé comme une fonction des niveaux de gris de départ des pixels adjacents au contour en question.

**4.** Le procédé tel que revendiqué à la revendication 3, **caractérisé en ce qu'**il comprend aussi une étape de calcul du mouvement de chaque contour détecté, et **en ce que** le niveau intermédiaire est par ailleurs calculé comme une fonction de l'amplitude du mouvement détecté pour ledit contour.

**5.** Le procédé tel que revendiqué dans la revendication 4, **caractérisé en ce que** le nombre de pixels du groupe de pixels consécutifs est défini en tant que fonction de l'amplitude du mouvement calculé pour le contour en question.

**6.** Un dispositif permettant d'afficher une séquence d'images vidéo comprenant une matrice de cellules luminescentes (1) conçue pour afficher le niveau de gris des pixels d'image de ladite séquence utilisant une modulation d'impulsions de durée (MID), un moyen (2) permettant de contrôler ladite matrice afin d'illuminer chacune des cellules pour une durée proportionnelle au niveau de gris du pixel d'image correspondant à afficher, **caractérisé en ce qu'**il comprend en plus :

- un premier moyen (7) permettant de détecter les contours de l'objet en mouvement dans ladite séquence d'images vidéo ;
- un second moyen permettant de déterminer un niveau de gris de départ d'au moins un premier pixel et un niveau de gris de départ d'un second pixel, le premier pixel étant positionné sur un côté adjacent audit contour et le second pixel étant positionné de l'autre côté adjacent audit contour sur une même rangée de pixels ;
- un troisième moyen (9) permettant de modifier dans une période de trame, pour au moins une image de ladite séquence et au moins un contour détecté dans ladite image au moins, le niveau de gris d'au moins un premier pixel adjacent audit contour en y affectant un niveau intermédiaire dans la plage située entre ledit niveau de gris de départ dudit premier pixel et ledit niveau de gris de départ du second pixel adjacent audit contour, ladite séquence modifiée étant livrée audit moyen pour contrôler ladite matrice ;
- un quatrième moyen permettant d'afficher ladite séquence d'images modifiée, l'impulsion MID utilisée pour afficher les niveaux de gris des pixels d'image étant centrés au milieu de la trame d'affichage de l'image,

dans lequel le moyen (2) permettant de contrôler ledit moyen matriciel comprend un amplificateur opérationnel (20), dont la sortie est raccordée aux cellules de la matrice, le signal de la séquence modifiée et un signal avec rampe de tension double étant appliqué respectivement aux première et seconde entrées dudit amplificateur.

**7.** Le dispositif tel que revendiqué dans la revendication 6, **caractérisé en ce que** le troisième moyen modifie le niveau de gris des pixels d'un groupe de pixels consécutifs cernant le contour en question et un niveau intermédiaire leur est affecté dans la plage située entre les niveaux de gris de départ des pixels adjacents audit contour.

**8.** Le dispositif tel que revendiqué dans l'une quelconque des revendications 6 et 7, **caractérisé en ce que** ledit troisième moyen comprend un moyen de calcul permettant de calculer le niveau intermédiaire en tant que fonction des niveaux de gris de départ des pixels adjacents au contour en question.

**9.** Le dispositif tel que revendiqué dans la revendication 8, **caractérisé en ce qu'**il comprend aussi un quatrième moyen (8) permettant de calculer le mouvement de chaque contour détecté.

**10.** Le dispositif tel que revendiqué à la revendication 9, **caractérisé en ce que** ledit moyen de calcul calcule le niveau intermédiaire en tant que fonction de l'amplitude du mouvement estimé pour le contour correspondant.

## FIG.1

**FIG.2a**

**FIG.2b**

**FIG.2c**

**FIG.2d**

**FIG.2e**

FIG.3A          FIG.3B          FIG.3C

FIG.4A

FIG.4B

FIG.4C

FIG.5A    FIG.5B    FIG.5C

FIG.6A

FIG.6B

FIG.6C

FIG.7

FIG.8A          FIG.8B          FIG.8C

FIG.9

FIG.10a

FIG.10b

FIG.10c

FIG.10d

FIG.10e

FIG.11A     FIG.11B     FIG.11C

FIG.12

$V_N$

FIG.13a

$V_{Cs}$

$V_{green}$ $V_{blue}$ $V_{red}$

FIG.13b

Dxfer

FIG.13c

V+
$V_{ramp}$

$V_{ramp}$ V $_{green}$

V+

FIG.13d

$V_{pixel}$

FIG.13e

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6239780 B

### Non-patent literature cited in the description

- **D. DOYEN et al.** *Compensation of false contours on a PDP using a pixel based motion estimator combined with an efficient coding technique,* 20 May 2003